# FASCICULE DE BREVET EUROPEEN

(11) **EP 0 488 853 B1**
(45) Date de publication et mention de la délivrance du brevet: **16.08.1995**
(21) Numéro de dépôt: 91403108.3
(22) Date de dépôt: 19.11.1991
(51) Int. Cl.: B60C 23/04, G01D 5/20, G01K 7/36, G01L 17/00, G01P 3/44

(54) **Dispositif à capteur passif pour la surveillance de l'état de pneumatique d'une roue de véhicule et la mesure des caractéristiques de rotation de la roue**
Passive Sensoreinrichtung zur Überwachung eines Fahrzeugreifens und zur Messung der Rotationsparameter des Rades
Passive sensor device for monitoring the condition of a tyre on a vehicle wheel and measuring rotational parameters of the wheel

(30) Priorité: 30.11.1990 FR 9015052
(43) Date de publication de la demande: 03.06.1992
(73) Titulaire: SKF FRANCE, F-92142 Clamart Cédex (FR)
(72) Inventeur: Rigaux, Christian, F-37260 Artannes sur Indre (FR)
(74) Mandataire: Dossmann, Gérard

(56) Documents cités:
- EP-A- 0 027 308
- EP-A- 0 235 750
- DE-C- 3 728 043
- FR-A- 2 420 439
- US-A- 4 048 614
- Aviation Week & Space Technology, May 7, 1979, New York, USA; pages 46+47+49+51+54, J. Mayfield "Cockpit Display of Aircraft Tire Pressure"

## Description

La présente invention concerne un dispositif permettant d'une part de surveiller l'état des pneumatiques d'au moins une roue de véhicule, et d'autre part de mesurer les caractéristiques de rotation de la roue, telles que vitesse de rotation, accélération angulaire, etc.

Un tel dispositif peut être utilisé pour de nombreux types de véhicules équipés de roues qui sont pourvus de pneumatiques. On peut citer à titre d'exemples les véhicules automobiles, les véhicules de transport routier, les wagons de métro et les trains d'atterrissage des avions.

En effet pendant le fonctionnement de tels véhicules, il est intéressant de connaître non seulement les caractéristiques de rotation des roues les équipant, mais également l'état de pneumatique de ces roues pour éviter notamment le sous-gonflage ou la surchauffe des pneumatiques, afin de préserver la sécurité des véhicules et par voie de conséquence la sécurité des usagers.

On connaît par la demande de brevet européen n° 0117 172, un dispositif de détection de sous-gonflage d'un pneumatique et de mesure de l'état cinétique de la roue d'un véhicule. Le dispositif comprend une roue dentée tournant avec la roue et dont les dents sont réalisées avec un matériau amagnétique et conducteur de l'électricité, à l'exception de l'une d'elles qui est réalisée avec un matériau non conducteur portant un bobinage conducteur, un électroaimant fixe constituant le capteur et dans lequel les dents orientées axialement de la roue dentée génèrent un signal qui sera traité par un calculateur. Le bobinage conducteur peut être court-circuité ou ouvert selon l'état de gonflage du pneumatique.

On connaît par ailleurs par la demande de brevet français 2 420 439 un dispositif contrôleur de pression de pneumatiques qui comporte une couronne dentée dont les dents sont orientées axialement. A la couronne dentée est associée un mécanisme de piston dont le fonctionnement dépend de la pression du pneumatique. Lorsque le pneumatique est sous-gonflé, le mécanisme permet, au moyen d'un piston, à une extrémité de broche de combler le vide entre deux dents consécutives de la couronne, de façon à ce que le signal induit dans le capteur présente une irrégularité lors de son passage devant l'extrémité de la broche.

Selon un article de J. Mayfield "Cockpit Display of Aircraft Tire Pressure" paru dans la revue "Aviation Week & Space Technology", May 7, 1979 New York. USA, pages 46-54, on peut utiliser une bobine émettrice et une bobine inductrice en mouvement de rotation l'une par rapport à l'autre pour indiquer la pression pneumatique.

La présente invention a pour objet un dispositif permettant à la fois de surveiller l'état des pneumatiques d'une roue, tel que la pression et/ou la température, et de mesurer les caractéristiques de rotation de la roue, telles que la vitesse de rotation et l'accélération angulaire, cela d'une façon simple et peu coûteuse.

Selon l'invention, le dispositif comprend un élément codeur rendu solidaire de la partie tournante du moyeu de roue, un moyen de surveillance de l'état d'un pneumatique de la roue en rotation pouvant modifier les caractéristiques de l'élément codeur selon la valeur d'au moins un paramètre prédéterminé de l'état du pneumatique, et un élément capteur fixe coopérant avec l'élément codeur pour délivrer un signal à un calculateur en vue de fournir des informations sur les caractéristiques de rotation de la roue d'une part, et l'état du pneumatique d'autre part.

Selon l'invention, l'élément codeur est constitué par un anneau magnétique multipolaire dont les segments aimantés de polarité différente sont répartis circonférentiellement de façon régulière et alternée, et par une bobine émettrice montée coaxialement à l'anneau multipolaire sur la partie tournante du moyeu de roue et parcourue par un courant électrique pour générer un champ magnétique se superposant au champ magnétique créé par l'anneau multipolaire au niveau de l'élément capteur, l'amplitude du signal induit dans l'élément capteur et correspondant au champ magnétique généré par la bobine émettrice étant directement fonction de la valeur du paramètre surveillé.

L'anneau multipolaire rendu solidaire d'un élément tournant du moyeu de roue peut être réalisé à partir de divers matériaux susceptibles de recevoir une magnétisation multipolaire permanente. Les matériaux choisis peuvent être rigides, tels que alliages métalliques, ou souples tels que matière plastique ou élastomère chargée d'une poudre magnétisable. La grande diversité de choix de matériaux facilite grandement l'intégration de l'anneau multipolaire correspondant dans des sous-ensembles mécaniques de dimensions souvent réduites, ce qui diffère des roues dentées rigides classiques ci-dessus mentionnées.

Selon l'invention, l'élément capteur fixe comprend une bobine réceptrice d'induction de forme annulaire, et un élément annulaire concentrateur de flux magnétique disposé coaxialement à l'anneau multipolaire et présentant une section en U dont les parties d'extrémité des deux branches forment un espace annulaire dans lequel l'anneau multipolaire est en rotation. La bobine d'induction est de préférence disposée au fond de la section en U de l'élément concentrateur de flux pour être en regard de l'anneau multipolaire.

Avantageusement, l'une au moins des parties d'extrémité des branches de la section en U de l'élément concentrateur de flux est pourvue de dents régulièrement espacées circonférentiellement par des absences de matière, de sorte que lesdites dents puissent concentrer et canaliser les lignes de champ magnétique dans le même sens à travers la bobine d'induction.

De cette manière, lorsqu'une seule branche du U est dentée, toutes les dents sont situées à tout moment face aux segments aimantés dont la polarité magnétique est la même. Lorsque les deux branches du U comportent des dents, les dents sont associées par paires de façon que deux pôles de signes opposés d'un segment aimanté de l'anneau multipolaire soient simultanément en regard de deux dents de l'élément concentrateur de flux.

L'élément concentrateur de flux magnétique est réalisé à l'aide d'un matériau ferromagnétique.

La bobine émettrice peut être alimentée en permanence en courant électrique alternatif à l'aide d'une source électrique (non représentée sur les dessins), l'amplitude nominale du champ magnétique ainsi généré au niveau de l'élément capteur est alors proportionnelle à la valeur du ou des paramètre(s) surveillé(s). La fréquence du courant alternatif se situe préférentiellement en dehors du domaine de fréquences relatives aux variations de champ magnétique créé par l'anneau multipolaire. Si plusieurs paramètres sont surveillés simultanément, la bobine émettrice est subdivisée en autant de parties indépendantes que de paramètres à surveiller, chaque partie étant alimentée par une source de courant alternatif. Les fréquences de courant sont alors choisies différentes l'une de l'autre.

Selon un autre mode de réaslisation de l'invention, la bobine émettrice n'est alimentée en courant électrique alternatif que lorsque la valeur du paramètre surveillé est considérée comme anormale par rapport à un seuil critique.

Il est possible de prévoir plusieurs sources électriques reliées chacune à la bobine émettrice et à un capteur spécifique pour la détection d'un paramètre spécifique, pour surveiller simultanément par exemple la pression et la température du pneumatique.

Le calculateur électronique relié à l'élément capteur, c'est-à-dire à la bobine d'induction, procède de manière connue en soi à l'analyse du signal afin de pouvoir en déduire les informations sur la vitesse de la roue et ses variations, ainsi que les paramètres mesurés dans le pneumatique.

On peut de cette façon choisir par exemple, soit la surveillance de la pression de gonflage du pneumatique, soit la température du pneumatique, soit les deux simultanément.

L'invention sera mieux comprise à l'étude de la description détaillée d'un mode de réalisation pris à titre d'exemple nullement limitatif et illustré par les dessins annexés sur lesquels :
la figure 1 est une vue en coupe axiale d'un dispositif selon l'invention équipant une roue non représentée et comportant un anneau multipolaire à aimantation radiale;
les figures 2a, 2b et 2c sont des signaux électriques induits dans la bobine réceptrice de l'invention; et
les figures 3, 4 et 5 donnent trois types d'aimantation radiale, axiale, circonférentielle de l'anneau multipolaire selon l'invention.

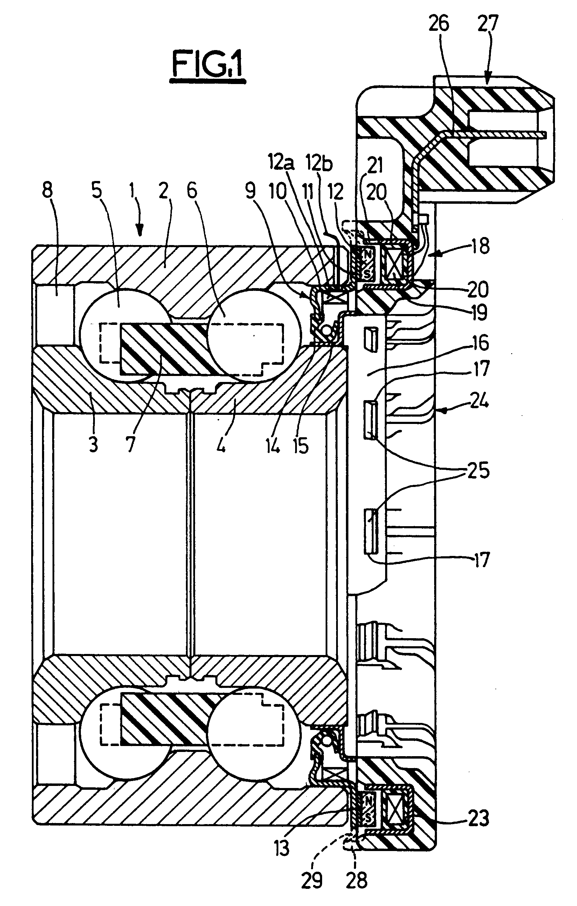

Comme montré sur la figure 1, le dispositif de surveillance de l'état de pneumatique d'une roue de véhicule et de mesure des caractéristiques de rotation de la roue, selon l'invention, est monté sur un palier à roulement 1 comportant une bague extérieure tournante 2 et deux demi-bagues intérieures non tournantes 3, 4. Entre la bague extérieure 2 et les deux demi-bagues intérieures 3, 4 sont montées deux rangées de billes 5, 6 à contact oblique maintenues avec un écartement convenable par une cage 7. La bague extérieure 2 peut être rendue solidaire ou faire corps avec le moyeu tournant de roue non représenté. La rotation de la roue entraîne directement la rotation de la bague extérieure 2 du palier à roulement 1.

L'étanchéité latérale du palier à roulement 1 est assurée d'un côté par un joint d'étanchéité de type classique 8 et de l'autre par un joint d'étanchéité 9 adapté au montage de l'élément codeur du dispositif de l'invention. A cet effet, le joint d'étanchéité 9 présente un flasque de support 10, de préférence en matériau amagnétique tel qu'un acier inox, monté dans l'alésage de la bague extérieure tournante 2 et muni d'une collerette radiale 11, un anneau multipolaire 12 à magnétisation radiale étant fixé sur ladite collerette radiale 11 directement ou par l'intermédiaire d'une couronne 13 non magnétique réalisée par exemple par un élastomère ou un matériau plastique. Le joint d'étanchéité 9 présente également une bague annulaire d'étanchéité 14 par exemple en caoutchouc venant en contact de frottement avec une armature 15 montée autour de la demi-bague 4. L'armature 15 présente une collerette 16 munie d'une pluralité de fentes 17.

Selon l'invention, l'anneau multipolaire 12 est constitué par une pluralité de segments aimantés de polarité différente répartis circonférentiellement de façon alternée et régulière. Une bobine émettrice 12a est montée sur le flasque de support 10 coaxialement à l'anneau multipolaire 12 et reliée électriquement à un moyen de surveillance de l'état pneumatique de la roue tournante non représentée via une liaison 12b, le moyen de surveillance pouvant être un manocontacteur pour la pression ou un thermocontacteur pour la température. L'anneau multipolaire 12 ainsi que la bobine émettrice 12a sont entraînés en rotation par la bague extérieure tournante 2 du palier à roulement 1 face à un élément capteur 18 fixe en rotation.

L'élément capteur 18 comprend une bobine réceptrice d'induction 19 et un élément concentrateur de flux magnétique 20 réalisé à partir d'un matériau ferromagnétique. L'élément concentrateur de flux 20, présente une forme annulaire dont la section est en U. L'élément concentrateur 20 enferme la bobine d'induction 19 au fond du U dont les branches font saillie au-delà de la bobine 19 pour être en face des circonférences intérieure et extérieure de l'anneau multipolaire 12. Dans cet exemple, la branche du U située radialement à l'extérieur est pourvue d'une pluralité de dents 21 dont la largeur sensiblement identique à la largeur circonférentielle d'un segment aimanté, les dents 21 étant espacées circonférentiellement de façon régulière pour être situées simultanément en face des segments aimantés de même polarité.

L'ensemble constitué par la bobine d'induction 19 et l'élément concentrateur 20 est avantageusement noyé par surmoulage à l'intérieur d'un bloc 23 de résine ou de matière plastique moulable et électriquement isolante pour constituer l'élément capteur 18 dans son ensemble.

L'élément capteur 18 est rendu solidaire d'une couronne de montage 24 qui présente une pluralité de griffes radiales 25 capables de venir s'encliqueter dans les fentes 17 de l'armature 15, les griffes 25 étant disposées dans l'alésage de la couronne 24 et venant pénétrer depuis l'extérieur dans les fentes 17. De cette manière, l'élément capteur 18 peut être aisément monté en regard de l'anneau multipolaire 12 se trouvant déjà en place, l'encliquetage de la couronne de montage 24 permettant de réduire les défauts de positionnement lors de l'assemblage.

La bobine d'induction 19 est reliée électriquement à des broches de connexion 26 d'une tête de connexion 27 intégrée à la couronne de montage 24 pour la transmission du signal émis par la bobine 19 jusqu'à une unité de traitement extérieure faisant par exemple partie d'un dispositif anti-blocage de roue de véhicule automobile.

Si cela est nécessaire, on peut prévoir des moyens d'étanchéité supplémentaires pour parfaire l'isolation par rapport au milieu extérieur. A titre d'exemple, on a illustré sur la figure 1 une variante représentée en trait interrompu dans laquelle la couronne de montage 24 présente un rebord périphérique 28 avec lequel entre en contact une lèvre d'étanchéité 29 faisant partie de la bague 13 servant de fixation à l'anneau multipolaire 12.

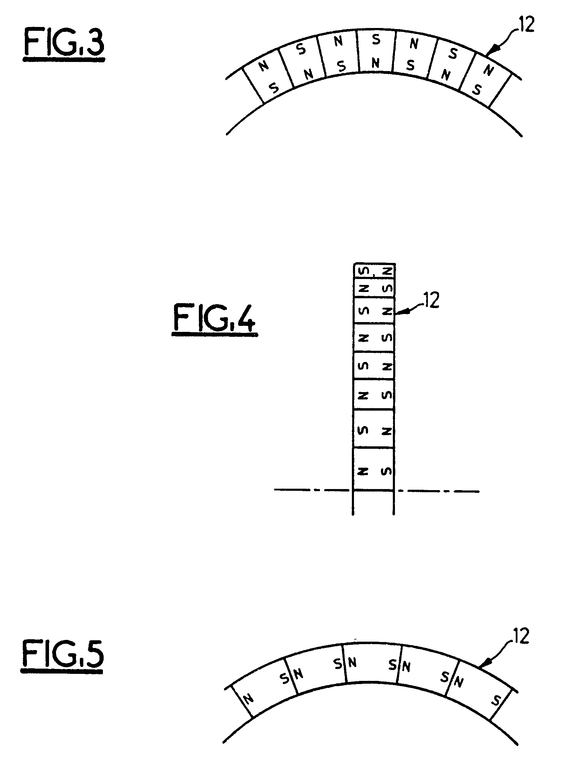

L'anneau multipolaire peut comporter une aimantation radiale comme dans l'exemple qui vient d'être décrit (figure 3), mais il peut présenter également une aimantation axiale (figure 4) ou circonférentielle (figure 5). Il suffit à cet effet de disposer l'élément capteur 18 radialement ou axialement de façon appropriée par rapport à l'anneau multipolaire 12 pour profiter de la variation périodique du champ magnétique lorsque l'anneau multipolaire est entraîné en rotation.

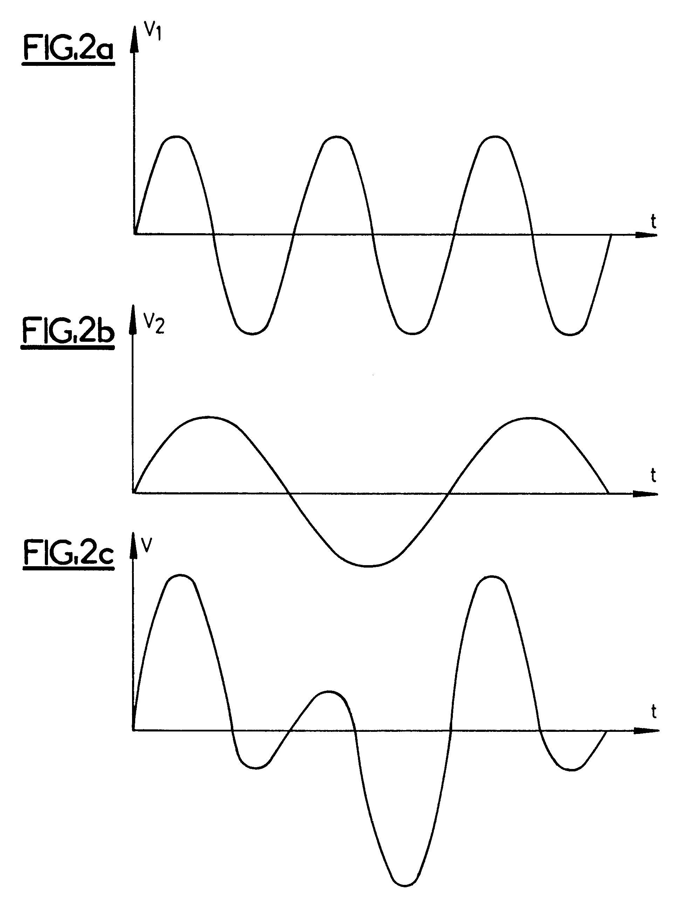

Les figures 2a à 2c montrent le fonctionnement du dispositif de l'invention qui permet d'une part de mesurer la vitesse de rotation ou des variations de vitesse de rotation de la roue et, d'autre part de surveiller l'état du pneumatique de la roue.

Sur les figures 2a, 2b et 2c sont représentés les signaux électriques générés dans la bobine d'induction 19 respectivement provoqués par les variations du champ magnétique de l'anneau multipolaire 12, par le champ magnétique créé par la bobine émettrice 12a lorsque celle-ci est alimentée en permanence en courant alternatif, et enfin la tension résultante du signal généré dans la bobine d'induction 19 et délivré au calculateur non représenté.

Les deux signaux induits (figures 2a et 2b) sont périodiques et de forme sensiblement sinusoïdale par rapport au temps. Les fréquences respectives de ces deux signaux sont distinctes l'une de l'autre pour que le calculateur puisse ensuite décomposer le signal résultant (figure 2c), de manière connue en soi, afin d'en déduire d'une part la vitesse de rotation et l'accélération angulaire de la roue, et d'autre part la présence ou l'absence d'anomalies de l'état du pneumatique en surveillant par exemple l'amplitude du signal résultant.

## Revendications

1. Dispositif de surveillance de l'état de pneumatique d'une roue de véhicule et de mesure des caractéristiques de rotation de la roue, comprenant un élément codeur rendu solidaire de la partie tournante (2) du moyeu de roue, un moyen de surveillance de l'état de pneumatique de la roue en rotation pouvant modifier les caractéristiques de l'élément codeur selon la valeur d'un paramètre prédéterminé de l'état du pneumatique tel que la pression ou la température du pneumatique, et un élément capteur fixe (18) coopérant avec l'élément codeur pour délivrer un signal à un calculateur en vue de fournir des informations sur les caractéristiques de rotation de la roue d'une part et l'état de pneumatique d'autre part, caractérisé par le fait que l'élément codeur est constitué par un anneau magnétique multipolaire (12) dont les segments aimantés de polarité différente sont répartis circonférentiellement de façon régulière et alternée, et une bobine émettrice (12a) montée coaxialement à l'anneau multipolaire (12) sur la partie tournante (2) du moyeu de roue et parcourue par un courant électrique pour générer un champ magnétique se superposant au champ magnétique créé par l'anneau multipolaire au niveau de l'élément capteur (18), la bobine émettrice (12a) étant alimentée en courant électrique alternatif soit seulement lorsque la valeur du paramètre surveillé est considérée comme anormale par rapport à un seuil critique, soit en permanence, la fréquence du courant alternatif étant située en dehors du domaine de fréquences relatives aux variations de champ magnétique généré par l'anneau multipolaire (12) en rotation avec la roue, l'amplitude du champ magnétique créé par la bobine émettrice étant alors proportionnelle à la valeur du paramètre surveillé.

2. Dispositif selon la revendication 1, caractérisé par le fait que l'élément capteur (18) comprend une bobine d'induction annulaire (19) et un élément annulaire concentrateur de flux magnétique (20) disposé coaxialement à l'anneau multipolaire (12) et présentant une section en U dont les parties d'extrémité des deux branches forment un espace annulaire dans lequel l'anneau multipolaire est en rotation, l'élément concentrateur de flux entourant la bobine d'induction dans la section en U.

3. Dispositif selon la revendication 2, caractérisé par le fait que l'une des parties d'extrémité des branches de la section en U de l'élément concentrateur de flux (20) est pourvue de dents régulièrement espacées circonférentiellement par des absences de matière, chaque dent présentant une largeur sensiblement identique à la largeur circonférentielle d'un segment aimanté de l'anneau multipolaire (12), toutes les dents étant situées face aux segments aimantés dont la polarité magnétique est la même.

4. Dispositif selon la revendication 2, caractérisé par le fait que les deux parties d'extrémité de la section en U de l'élément concentrateur de flux (20) sont pourvues de dents dont la largeur est sensiblement identique à la largeur circonférentielle d'un segment aimanté de l'anneau multipolaire (12), les dents étant réparties circonférentiellement de façon régulière de sorte que deux pôles de signes opposés d'un segment aimanté de l'anneau multipolaire soient simultanément en regard de deux dents de l'élément concentrateur de flux.

5. Dispositif selon l'une des revendications précédentes, caractérisé par le fait que la bobine émettrice (12a) comprend deux ou plusieurs parties indépendantes, chacune étant alimentée par une source de courant alternatif et correspondant à un paramètre spécifique de l'état du pneumatique, tel que la pression et la température du pneumatique, les fréquences des courants étant différentes l'une de l'autre.

6. Dispositif selon l'une des revendications 1 à 4, caractérisé par le fait que le paramètre surveillé est la pression du pneumatique, et que le seuil critique est constitué soit par un seuil de pression minimum, ou un seuil de pression maximum, soit par deux seuils minimum et maximum de pression.

7. Dispositif selon l'une des revendications 1 à 4, caractérisé par le fait que le paramètre surveillé est la température du pneumatique et que le seuil critique correspond à un seuil de température maximale.

8. Dispositif selon l'une des revendications 1 à 5, caractérisé par le fait qu'il surveille à la fois la pression et la température du pneumatique au moyen de deux sources de courant indépendantes et reliées chacune à la bobine émettrice (12a).

## Claims

1. Device for monitoring the state of the tyre of a vehicle wheel and for measuring the rotation characteristics of the wheel, comprising an encoder element securely attached to the rotating part (2) of the wheel hub, a means for monitoring the state of the tyre of the wheel in rotation capable of modifying the characteristics of the encoder element depending on the value of a predetermined parameter of the state of the tyre such as the pressure or the temperature of the tyre, and a fixed pick-up element (18) cooperating with the encoder element to deliver a signal to a computer with a view to supplying information on the rotation characteristics of the wheel on the one hand and the state of the tyre on the other hand, characterised by the fact that the encoder element is constituted by a multipolar magnetic ring (12) whereof the magnetised segments of different polarity are distributed circumferentially in regular and alternating manner, and a transmitter coil (12a) mounted coaxially with the multipolar ring (12) on the rotating part (2) of the wheel hub, an electric current flowing through said coil in order to generate a magnetic field superimposing itself on the magnetic field created by the multipolar ring in line with the pick-up element (18), the transmitter coil (12a) being energised with alternating electric current either only when the value of the parameter monitored is considered to be abnormal with respect to a critical threshold, or continuously, the frequency of the alternating current being situated outside the range of frequencies relating to the variations in magnetic field generated by the multipolar ring (12) in rotation with the wheel, the amplitude of the magnetic field created by the transmitter coil then being proportional to the value of the parameter monitored.

2. Device according to Claim 1, characterised by the fact that the pick-up element (18) comprises an annular induction coil (19) and an annular magnetic flux focusing element (20) arranged coaxially with the multipolar ring (12) and presenting a U-shaped cross-section whereof the end parts of the two branches form an annular space in which the multipolar ring is in rotation, the flux focusing element surrounding the induction coil in the U-shaped cross-section.

3. Device according to Claim 2, characterised by the fact that one of the end parts of the branches of the U-shaped cross-section of the flux focusing element (20) is provided with teeth regularly spaced circumferentially by absences of material, each tooth having a width substantially the same as the circumferential width of one magnetised segment of the multipolar ring (12), all of the teeth being situated opposite the magnetised segments the magnetic polarity of which is the same.

4. Device according to Claim 2, characterised by the fact that the two end parts of the U-shaped cross-section of the flux focusing element (20) are provided with teeth the width of which is substantially the same as the circumferential width of one magnetised segment of the multipolar ring (12), the teeth being regularly distributed circumferentially so that two poles of opposite signs of a magnetised segment of the multipolar ring are simultaneously opposite two teeth of the flux focusing element.

5. Device according to one of the preceding claims, characterised by the fact that the transmitter coil (12a) comprises two or more independent parts, each being energised by a source of alternating current and corresponding to a specific parameter of the state of the tyre, such as the pressure and the temperature of the tyre, the frequencies of the currents being different from one another.

6. Device according to Claims 1 to 4, characterised by the fact that the parameter monitored is the pressure of the tyre, and that the critical threshold is constituted either by a minimum pressure threshold, or a maximum pressure threshold, or by both minimum and maximum pressure thresholds.

7. Device according to Claims 1 to 4, characterised by the fact that the parameter monitored is the temperature of the tyre and that the critical threshold corresponds to a maximum temperature threshold.

8. Device according to Claims 1 to 5, characterised by the fact that it monitors simultaneously the pressure and the temperature of the tyre by means of two independent sources of current, each connected to the transmitter coil (12a).

## Patentansprüche

1. Vorrichtung zum Überwachen des Reifenbetriebszustands eines Fahrzeugrades und zum Messen der Umdrehungskenngrößen des Rades, mit einem Geberelement, das mit dem umlaufenden Teil (2) der Radnabe fest verbunden ist, mit einem Mittel zum Überwachen des Reifenbetriebszustands des umlaufenden Rades, wobei das Mittel die Charakteristik des Geberelementes gemäß dem Wert eines vorbestimmten Parameters des Reifenbetriebszustands, wie zum Beispiel dem Druck oder der Temperatur des Reifens, verändern kann, und mit einem ortsfesten Aufnehmerelement (18), das mit dem Geberelement zur Abgabe eines Signals an einen Rechner zusammenwirkt, um damit Informationen zum einen über die Umdrehungskenngrößen des Rades und zum anderen über den Reifenbetriebszustand zu übermitteln, dadurch gekennzeichnet, daß das Geberelement durch einen mehrpoligen magnetischen Ring (12), dessen mit unterschiedlicher Polarität magnetisierte Segmente gleichmäßig und alternierend längs des Umfangs verteilt sind, und durch eine Erregerspule (12a) gebildet ist, die auf dem sich drehenden Teil (2) der Radnabe koaxial zu dem mehrpoligen Ring (12) montiert und von einem elektrischen Strom durchflossen ist, um ein Magnetfeld zu erzeugen, das sich dem von dem mehrpoligen Ring erzeugten Magnetfeld in der Höhe des Aufnehmerelementes (18) überlagert, wobei die Erregerspule (12a) entweder ständig oder nur dann mit Wechselstrom gespeist wird, wenn der Wert des überwachten Parameters in Bezug auf einen kritischen Schwellenwert als nicht normal betrachtet wird, wobei die Frequenz des Wechselstroms außerhalb des Frequenzbereichs der Magnetfeldänderungen liegt, die von dem mit dem Rad umlaufenden mehrpoligen Ring (12) erzeugt werden, und wobei die Amplitude des von der Erregerspule erzeugten Magnetfelds zu dem Wert des jeweils überwachten Parameters proportional ist.

2. Vorrichtung nach Anspruch 1, dadurch gekennzeichnet, daß das Aufnehmerelement (18) eine ringförmige Induktionsspule (19) und ein ringförmiges Magnetflußleitelement (20) aufweist, das koaxial zu dem mehrpoligen Ring (12) angeordnet ist und das einen U-förmigen Querschnitt aufweist, bei dem die Endabschnitte der beiden Schenkel einen ringförmigen Raum bilden, in welchem der mehrpolige Ring umläuft, wobei das Flußleitelement die in dem U-förmigen Querschnitt befindliche Induktionsspule umgibt.

3. Vorrichtung nach Anspruch 2, dadurch gekennzeichnet, daß einer der Endabschnitte der Schenkel des U-förmigen Querschnittes des Flußleitelementes (20) mit durch Materialausnehmungen längs des Umfangs gleichmäßig beabstandeten Zähnen versehen ist, wobei jeder Zahn eine Breite aufweist, die ungefähr der Breite in Umfangsrichtung eines magnetisierten Segments des mehrpoligen Ringes (12) entspricht, und wobei alle Zähne magnetisierten Segmenten gegenüber liegen, deren magnetische Polarität jeweils gleich ist.

4. Vorrichtung nach Anspruch 2, dadurch gekennzeichnet, daß die beiden Endabschnitte des U-förmigen Querschnittes des Flußleitelementes (20) mit Zähnen versehen sind, deren Breite ungefähr der Breite in Umfangsrichtung eines magnetisierten Segmentes des mehrpoligen Ringes (12) entspricht, wobei die Zähne in Umfangsrichtung gleichmäßig derart verteilt sind, daß zwei Pole mit umgekehrtem Vorzeichen eines magnetisierten Segmentes des mehrpoligen Ringes jeweils zwei Zähnen des Flußleitelementes gleichzeitig gegenüber liegen.

5. Vorrichtung nach einem der vorstehenden Ansprüche, dadurch gekennzeichnet, daß die Erregerspule (12a) zwei oder mehrere unabhängige Teile aufweist, von denen jeder von einer Wechselstromquelle gespeist wird, die einem bestimmten Parameter des Reifenbetriebszustands zugeordnet ist, wie zum Beipiel dem Druck oder der Temperatur des Reifens, wobei sich die Frequenzen der Ströme voneinander unterscheiden.

6. Vorrichtung nach einem der Ansprüche 1 bis 4, dadurch gekennzeichnet, daß der überwachte Parameter der Reifendruck ist und daß der kritische Schwellenwert entweder von einem minimalen Druckschwellenwert oder von einem maximalen Druckschwellenwert oder sowohl von einem minimalen als auch von einem maximalen Druckschwellenwert gebildet ist.

7. Vorrichtung nach einem der Ansprüche 1 bis 4, dadurch gekennzeichnet, daß der überwachte Parameter die Reifentemperatur ist und daß der kritische Schwellenwert einem maximalen Temperaturschwellenwert entspricht.

8. Vorrichtung nach einem der Ansprüche 1 bis 5, dadurch gekennzeichnet, daß sie gleichzeitig den Druck und die Temperatur des Reifens mittels zweier unabhängiger Stromquellen überwacht, von denen jede mit der Erregerspule (12a) verbunden ist.
